(19) Europäisches Patentamt
European Patent Office
Office européen des brevets

(11) **EP 2 025 090 B1**

(12) **FASCICULE DE BREVET EUROPEEN**

(45) Date de publication et mention
de la délivrance du brevet:
**08.12.2010 Bulletin 2010/49**

(21) Numéro de dépôt: **07765327.7**

(22) Date de dépôt: **06.06.2007**

(51) Int Cl.:
**H04L 9/08** (2006.01)

(86) Numéro de dépôt international:
**PCT/EP2007/055590**

(87) Numéro de publication internationale:
**WO 2007/141301 (13.12.2007 Gazette 2007/50)**

(54) **PROCEDE ET DISPOSITIF DE TRANSMISSION DE DONNEES EN CLAIR A TRAVERS UNE RESSOURCE CRYPTOGRAPHIQUE SANS CANAL CLAIR**

VERFAHREN UND VORRICHTUNG ZUR ÜBERTRAGUNG VON UNVERSCHLÜSSELTEN DATEN ÜBER EINE KRYPTOGRAPHIE-QUELLE OHNE KLARTEXTKANAL

PROCESS AND DEVICE FOR THE TRANSMISSION OF UNENCRYPTED DATA VIA A CRYPTOGRAPHIC RESOURCE WITHOUT CLEAN CHANNEL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.06.2006 FR 0605008**

(43) Date de publication de la demande:
**18.02.2009 Bulletin 2009/08**

(73) Titulaire: **Thales**
**92200 Neuilly Sur Seine (FR)**

(72) Inventeur: **DUPUTZ, Patrick**
**49300 Cholet (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-01/17160      US-A- 5 164 986**
**US-A- 5 404 403**

• **ELLIS B: "Key management engine techniques for sensitive or classified equipment initialization" MILITARY COMMUNICATIONS CONFERENCE, 1993. MILCOM '93. CONFERENCE RECORD. COMMUNICATIONS ON THE MOVE., IEEE BOSTON, MA, USA 11-14 OCT. 1993, NEW YORK, NY, USA,IEEE, US, 11 octobre 1993 (1993-10-11), pages 354-358, XP010142776 ISBN: 0-7803-0953-7**

**Description**

L'invention concerne notamment un procédé permettant l'échange de données en clair au sein d'un dispositif de cryptographie.

Sous l'expression « dispositif de cryptographie », on désigne tout produit matériel ou logiciel qui intègre des fonctions cryptographiques.

Les composants matériels et logiciels d'un moyen de cryptographie échangent en clair des données non sensibles, par exemple des données de gestion inter zones (configuration, initialisation, supervision, alarmes).

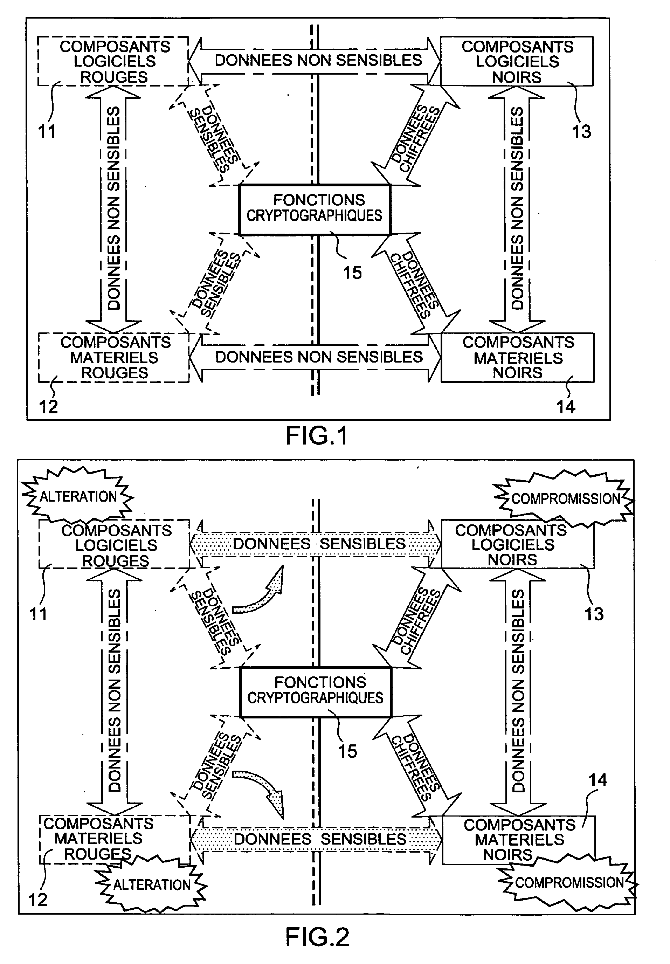

La figure 1 schématise un exemple d'échanges de données au sein d'un moyen de cryptographie. Les données sensibles sont (dé)chiffrées par les fonctions cryptographiques 15, placées en coupure entre les composants logiciels 11 et matériels 12 rouges et les composants logiciels 13 et matériels 14 noirs. Les données non sensibles transitent entre l'ensemble des composants logiciels et matériels. En particulier, les échanges entre les composants logiciels rouges 11 et noirs 13 et les échanges entre les composants matériels rouges 12 et noirs 14 obligent à contourner les fonctions cryptographiques 15. La possibilité de contourner les fonctions cryptographiques induit une vulnérabilité majeure. Il est en effet difficile de garantir qu'une anomalie de fonctionnement d'un composant n'engendre aucune compromission de données sensibles. Ceci est représenté par exemple sur la figure 2 (un exemple de panne logicielle des composants logiciels rouges 11 dans la partie supérieure, un exemple de panne matérielle dans composants matériels rouges 12 dans la partie inférieure).

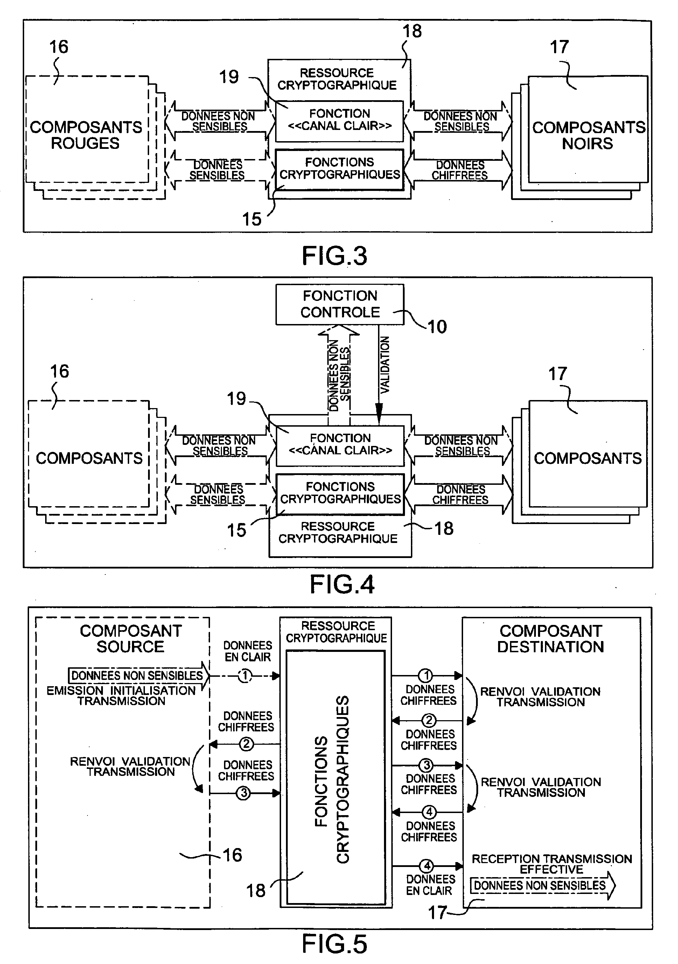

A la connaissance du demandeur, en règle générale, la ressource cryptographique 18 figure 3 (sous-ensemble matériel ou logiciel qui rassemble toutes les fonctions cryptographiques du moyen de cryptographie) assure au sein du moyen la séparation rouge/noir. Elle est placée en coupure sur l'ensemble des flux de données, échangés entre les composants sensibles (rouges) 16 et les composants non sensibles (noirs) 17, comprenant les données utilisateurs sensibles et les données non sensibles de gestion interzone.

Les ressources cryptographiques modernes intègrent en plus de l'ensemble des fonctions cryptographiques 15 du moyen, une fonction «canal clair» 19. Cette fonction « canal clair » autorise l'échange en clair de données non sensibles entre les composants matériels ou logiciels sensibles (rouges) 16 et non sensibles (noirs) 17 interconnectés à la ressource cryptographiques (figure 3).

La mise en oeuvre de la fonction «canal clair» 19 est la suivante: le composant source 16 envoie les données en clair à la ressource cryptographique 18, qui les renvoie en clair vers le composant destinataire 17. Cette simplicité rend inefficace la détection d'une mauvaise mise en oeuvre de cette fonction par la ressource cryptographique.

Pour obtenir une détection fiable, il est connu de l'art antérieur le dispositif représenté à la figure 4 : la ressource cryptographique 18 est associée à une fonction de contrôle 20 qui détecte la présence de données non autorisées - potentiellement sensibles - passées à la fonction «canal clair» 19 (figure 4). La fonction de contrôle supplémentaire 20 est complexe à paramétrer et requiert une capacité de traitement et une quantité de mémoire élevées.

Ni la solution basée sur la seule fonction «canal clair», ni la solution mettant en oeuvre une fonction «canal clair» sécurisée à l'aide d'une fonction de contrôle apporte un réel compromis entre niveau de sécurité et niveau de complexité (coût).

Le brevet US 5 164 986 décrit un procédé de transmission de message sensible entre un expéditeur et un destinataire, utilisant un mécanisme d'acquittement dans lequel le destinataire reçoit le message sensible, envoie un acquittement à l'expéditeur puis déchiffre le message sensible.

L'idée de la présente invention consiste notamment à ne pas utiliser la fonction « canal clair » de la ressource cryptographique et à réaliser les échanges de données en clair sans contourner les fonctions cryptographiques.

L'invention concerne un procédé de transmission de données en clair au sein d'une ressource cryptographique implémentant un algorithme cryptographique **caractérisé en ce qu'**il comporte au moins les étapes suivantes :

○ l'expéditeur transmet un message contenant les données à une première étape de cryptographie,

○ chiffrer le message et émettre le message chiffré, vers un destinataire,
La première passe est sur l'initiative du composant source :

○ le composant source envoie les données en clair à la ressource et demande le chiffrement des données avec sa propre clé,

○ la ressource chiffre les données avec la clé du composant source, puis les envoie au composant destinataire,

○ le composant destinataire reçoit les données chiffrées.

○ attendre l'acquittement de réception du message par le destinataire,

La seconde passe est sur l'initiative du composant destinataire :

○ le composant destinataire renvoie les données chiffrées à la ressource et demande le chiffrement des données avec sa propre clé,

○ la ressource surchiffre les données avec la clé du composant destinataire, puis les envoie au composant source,

○ le composant source reçoit les données surchiffrées

○ transmettre à nouveau le message chiffré vers une deuxième étape de cryptographie,

La troisième passe est sur l'initiative du composant source :

○ le composant source renvoie les données surchiffrées à la ressource et demande le déchiffrement des données avec sa propre clé,

○ la ressource déchiffre les données avec la clé du composant source, puis les envoie au composant destinataire,

○ le composant destinataire reçoit les données chiffrées,

○ déchiffrer le message et le transmettre au destinataire,

La quatrième et dernière passe est à l'initiative du composant destinataire :

○ le composant destinataire renvoie les données chiffrées à la ressource et demande le déchiffrement des données avec sa propre clé,

○ la ressource déchiffre les données avec la clé du composant destinataire, puis les renvoie au composant destinataire,

○ le composant destinataire reçoit les données en clair.

Selon une variante de mise en oeuvre, le procédé comporte l'étape suivante : si la ressource cryptographique détecte une demande de chiffrement ou de déchiffrement associée à une clé cryptographique non attribuée au composant demandeur de l'opération cryptographique, alors elle bloque la transmission et remonte une alarme de sécurité au sein du moyen de cryptographie.

Selon une autre variante de réalisation, si un composant matériel ou logiciel reçoit une seconde ou une troisième passe sans avoir traité respectivement la première ou la seconde passe, il bloque la transmission et remonte une alarme de sécurité au sein du moyen de cryptographie

Le procédé peut aussi comporter l'étape suivante : la ressource cryptographique distribue aux composants source et destination un vecteur d'initialisation avant chaque transmission de données en clair.

Le procédé selon l'invention offre notamment les avantages suivants :

○ la ressource cryptographique peut contrôler efficacement la bonne mise en oeuvre de la transmission de données en clair (vérification de l'intégrité des quatre passes successives), et elle permet au composant source de valider l'envoi avant transmission effective des données en clair vers le composant destinataire (au moment de générer et d'émettre la troisième passe),

○ il est simple et s'adapte facilement à tous les systèmes d'information. Son implémentation est faisable aussi bien en logiciel qu'en matériel,

○ Il nécessite peu de ressource mémoire et peu de puissance de calcul. Il exploite des fonctions cryptographiques dans un mode de fonctionnement courant,

○ La solution offre un bon compromis entre coût d'implémentation et niveau de sécurité.

D'autres caractéristiques et avantages de la présente invention apparaîtront mieux à la lecture de la description qui suit d'un exemple de réalisation, donné à titre illustratif et nullement limitatif, annexé des figures qui représentent :

○ Les figures 1, 2 et 3 des exemples de moyen de cryptographie selon l'art antérieur,

○ La figure 4 une variante de moyen de cryptographie selon l'art antérieur incluant une fonction de contrôle,

○ La figure 5 un moyen de cryptographie selon l'invention et

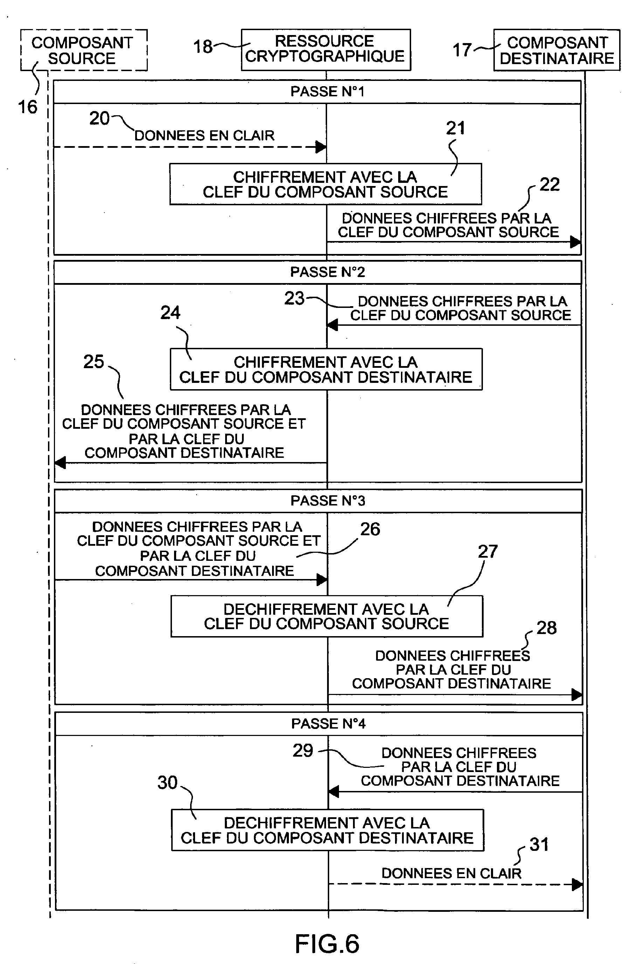

○ la figure 6 les différentes étapes mises en oeuvre par ce moyen.

La figure 5 schématise l'architecture d'un moyen de cryptographie permettant la mise en oeuvre du procédé selon l'invention.

Le moyen cryptographique comprend par exemple un composant source 16, une ressource cryptographique 18 et un composant destination 17.

Le procédé s'appuie notamment sur un protocole d'échange de données en quatre passes successives, avec chiffrement et déchiffrement intermédiaires, inspiré du principe cryptographique de double cadenas, les étapes mises en oeuvre étant détaillées ci-après.

La figure 6 schématise les différents échanges exécutés par le procédé selon l'invention.

Clés cryptographiques :

La ressource cryptographique attribue une clé cryptographique différente à chaque composant matériel et logiciel du moyen. La génération, l'attribution et le traitement des clés cryptographiques sont réalisés par la ressource cryptographique : les composants ne manipulent aucune clé cryptographique.

La ressource cryptographique autorise le chiffrement et le déchiffrement de données avec la clé attribuée au composant demandeur de l'opération cryptographique : un composant ne peut pas déchiffrer des données avec la clé attribuée à un autre composant.

Algorithme et mode cryptographiques :

La ressource cryptographique implémente un algorithme cryptographique dont le mode de fonctionnement vérifie par exemple la propriété suivante :

$$\text{ALGO}^{-1}_{KA} \left[ \text{ALGO}^{-1}_{KB} \left[ \text{ALGO}_{KA} \left[ \text{ALGO}_{KB} \left[ M \right] \right] \right] \right] = M$$

Ce mode et cet algorithme cryptographiques sont dédiés à la mise en oeuvre du procédé de transmission de données en clair à travers la ressource cryptographique. Ce mode et cet algorithme ne doivent pas servir à protéger des données sensibles.

L'efficacité de ce mode et de cet algorithme cryptographiques doit être d'un niveau comparable à celui des modes et des algorithmes cryptographiques assurant la protection des données sensibles.

La figure 6 schématise le protocole d'échange mis en oeuvre par le procédé selon l'invention.

La première passe est sur l'initiative du composant source :

○ le composant source envoie les données en clair à la ressource et demande le chiffrement des données avec sa propre clé, 20,

○ la ressource chiffre les données avec la clé du composant source, puis les envoie au composant destinataire, 21,

○ le composant destinataire reçoit les données chiffrées, 22.

La seconde passe est sur l'initiative du composant destinataire :

○ le composant destinataire renvoie les données chiffrées à la ressource et demande le chiffrement des données avec sa propre clé, 23,

○ la ressource surchiffre les données avec la clé du composant destinataire, puis les envoie au composant source, 24,

○ le composant source reçoit les données surchiffrées, 25.

La troisième passe est sur l'initiative du composant source :

○ le composant source renvoie les données surchiffrées à la ressource et demande le déchiffrement des données avec sa propre clé, 26,

○ la ressource déchiffre les données avec la clé du composant source, puis les envoie au composant destinataire, 27,

○ le composant destinataire reçoit les données chiffrées, 28.

La quatrième et dernière passe est à l'initiative du composant destinataire :

○ le composant destinataire renvoie les données chiffrées à la ressource et demande le déchiffrement des données avec sa propre clé, 29,

○ la ressource déchiffre les données avec la clé du composant destinataire, puis les renvoie au composant destinataire, 30,

○ le composant destinataire reçoit les données en clair, 31.

Contrôle de la mise en oeuvre et traitement des anomalies :

Si la ressource cryptographique détecte une demande de chiffrement ou de déchiffrement associée à une clé cryptographique non attribuée au composant demandeur de l'opération cryptographique, elle bloque la transmission et remonte une alarme de sécurité au sein du moyen de cryptographie.

Si un composant matériel ou logiciel reçoit une seconde ou une troisième passe sans avoir traité respectivement la première ou la seconde passe, il bloque la transmission et remonte une alarme de sécurité au sein du moyen de cryptographie.

Durcissement du procédé :

La détection d'une mauvaise mise en oeuvre du procédé peut être renforcée à l'aide des mesures suivantes :

○ la redondance d'information dans les échanges de données : le format des échanges de données entre les composants source et destination et la ressource cryptographique peut contenir des champs d'informations complémentaires qui sont facilement vérifiables par les composants source et destination et par la ressource. Par exemple : un champ précisant la taille des données échangées, un champ transportant un code détecteur d'erreur sur les données, un champ identifiant la clé de l'opération cryptographique à réaliser, un champ précisant le rang de la passe (1,2,3 ou 4)...etc.

○ la gestion d'un vecteur d'initialisation aléatoire ou horaire (marquant) et/ou d'un compteur d'anti-rejeu : la ressource cryptographique peut distribuer aux composants source et destination un vecteur d'initialisation avant chaque transmission de données en clair. Une demande de chiffrement ou de déchiffrement associée à un vecteur d'initialisation et/ou à une valeur de compteur d'anti-rejeu non conforme(s) est facilement détectable par la ressource : utilisation d'un marquant différent de celui distribué, réutilisation d'une valeur périmée de compteur anti-rejeu.

Le procédé est compatible avec la mise en oeuvre d'une fonction complémentaire de contrôle des données échangées.

**Revendications**

1. Procédé de transmission de données en clair au sein d'une ressource cryptographique implémentant un algorithme cryptographique **caractérisé en ce qu'**il comporte au moins les étapes suivantes :

○ l'expéditeur transmet un message contenant les données à une première étape de cryptographie,
○ chiffrer le message et émettre le message chiffré, vers un destinataire,

La première passe est sur l'initiative du composant source :

○ le composant source envoie les données en clair à la ressource et demande le chiffrement des données avec sa propre clé (20),
○ la ressource chiffre les données avec la clé du composant source, puis les envoie au composant destinataire (21),
○ le composant destinataire reçoit les données chiffrées (22).

○ attendre l'acquittement de réception du message par le destinataire,
La seconde passe est sur l'initiative du composant destinataire :

○ le composant destinataire renvoie les données chiffrées à la ressource et demande le chiffrement des données avec sa propre clé (23),
○ la ressource surchiffre les données avec la clé du composant destinataire, puis les envoie au composant source (24),
○ le composant source reçoit les données surchiffrées (25),

○ transmettre à nouveau le message chiffré vers une deuxième étape de cryptographie,
La troisième passe est sur l'initiative du composant source :

○ le composant source renvoie les données surchiffrées à la ressource et demande le déchiffrement des données avec sa propre clé (26),
○ la ressource déchiffre les données avec la clé du composant source, puis les envoie au composant destinataire (27),
○ le composant destinataire reçoit les données chiffrées (28),

○ déchiffrer le message et le transmettre au destinataire,
La quatrième et dernière passe est à l'initiative du composant destinataire :

○ le composant destinataire renvoie les données chiffrées à la ressource et demande le déchiffrement des données avec sa propre clé (29),
○ la ressource déchiffre les données avec la clé du composant destinataire, puis les renvoie au composant destinataire (30),
○ le composant destinataire reçoit les données en clair (31).

2. Procédé selon la revendication 1, **caractérisé en ce qu'**il comporte l'étape suivante : si la ressource cryptographique détecte une demande de chiffrement ou de déchiffrement associée à une clé cryptographique non attribuée au composant demandeur de l'opération cryptographique, alors elle bloque la transmission et remonte une alarme de sécurité au sein du moyen de cryptographie.

3. Procédé selon la revendication 1, **caractérisé en ce qu'**il comporte au moins les étapes suivantes : si un composant matériel ou logiciel reçoit une seconde ou une troisième passe sans avoir traité respectivement la première ou la seconde passe, il bloque la transmission et remonte une alarme de sécurité au sein du moyen de cryptographie.

4. Procédé selon la revendication 1, **caractérisé en ce qu'**il comporte au moins les étapes suivantes : la ressource cryptographique distribue aux composants source et destination un vecteur d'initialisation avant chaque transmission de données en clair.

**Claims**

1. A process of transmitting unencoded data within a cryptographic resource implementing a cryptographic algorithm, **characterised in that** it comprises at least the following steps:

- transmitting a message containing the data from the sender to a first cryptographic step;
- encoding the message and sending the encoded message to a recipient; wherein the first stage is initiated by the source component:

- the source component sends the unencoded data to the resource and requests data encoding using its own key (20);
- the resource encodes the data using the key of the source component and then sends said data to the recipient component (21);
- the recipient component receives the encoded data (22);

- waiting for the acknowledgement of receipt of the message from the recipient;

wherein the second stage is initiated by the recipient component:

- the recipient component sends the encoded data to the resource and requests data encoding using its own key (23);
- the resource super-encodes the data using the key of the recipient component and then sends said data to the source component (24);
- the source component receives the super-encoded data (25);
- resending the encoded message to a second cryptographic step;

wherein the third stage is initiated by the source component:

- the source component sends the super-encoded data to the resource and requests decoding of the data using its own key (26);
- the resource decodes the data using the key of the source component and then sends said data to the recipient component (27);
- the recipient component receives the encoded data (28);
- decoding the message and sending it to the recipient;

wherein the fourth and final stage is initiated by the recipient component:

- the recipient component sends the encoded data to the resource and requests decoding of the data using its own key (29);
- the resource decodes the data using the key of the recipient component and then sends said data to the recipient component (30);
- the recipient component receives the unencoded data (31).

2. The process according to claim 1, **characterised in that** it includes the following step: if the cryptographic resource detects an encoding or decoding request associated with a cryptographic key which is not attributed to the requesting component of the cryptographic operation, it blocks the transmission and sends a security alert to the cryptographic means.

3. The process according to claim 1, **characterised in that** it includes at least the following steps: if a hardware or software component receives a second or a third stage without having processed the first or the second stage, respectively, it blocks the transmission and sends a security alert to the cryptographic means.

4. The process according to claim 1, **characterised in that** it at least includes the following steps: the cryptographic resource distributes an initialisation vector to the source and destination components before each transmission of unencrypted data.

**Patentansprüche**

1. Verfahren zum Übertragen von Daten unverschlüsselt innerhalb einer kryptographischen Ressource, die einen kryptographischen Algorithmus implementiert, **dadurch gekennzeichnet, dass** es wenigstens die folgenden Schritte beinhaltet:

- Übertragen einer Nachricht, die die Daten vom Absenden enthält, zu einem ersten kryptographischen Schritt;
- Verschlüsseln der Nachricht und Senden der verschlüsselten Nachricht zu einem Empfänger;
wobei die erste Stufe von der Ursprungskomponente initiiert wird:

- die Ursprungskomponente sendet die Daten unverschlüsselt zur Ressource und fordert eine Verschlüsselung der Daten mit ihrem eigenen Schlüssel an (20);
- die Ressource verschlüsselt die Daten mit dem Schlüssel der Ursprungskomponente und sendet die Daten dann zur Empfängerkomponente (21);
- die Empfängerkomponente empfängt die verschlüsselten Daten (22);
- Warten auf die Bestätigung des Empfangs der Nachricht vom Empfänger;

wobei die zweite Stufe von der Empfängerkomponente initiiert wird:

- die Empfängerkomponente sendet die verschlüsselten Daten zu der Ressource und fordert eine Verschlüsselung der Daten mit ihrem eigenen Schlüssel an (23),
- die Ressource überverschlüsselt die Daten mit dem Schlüssel der Empfängerkomponente und sendet die Daten zur Ursprungskomponente (24),
- die Ursprungskomponente empfängt die überverschlüsselten Daten (25);
- erneutes Senden der verschlüsselten Nachricht zu einem kryptographischen Schritt,

wobei die dritte Stufe von der Ursprungskomponente initiiert wird:

- die Ursprungskomponente sendet die überverschlüsselten Daten zu der Ressource und fordert eine Entschlüsselung der Daten mit ihrem eigenen Schlüssel an (26),
- die Ressource entschlüsselt die Daten mit dem Schlüssel der Ursprungskomponente und sendet die Daten dann zur Empfängerkomponente (27),
- die Empfängerkomponente empfängt die verschlüsselten Daten (28),
- Entschlüsseln der Nachricht und Senden zum Empfänger,

wobei die vierte und letzte Stufe von der Empfängerkomponente initiiert wird:

- die Empfängerkomponente sendet die verschlüsselten Daten zur Ressource und fordert das Entschlüsseln der Daten mit ihrem eigenen Schlüssel (29) an,
- die Ressource entschlüsselt die Daten mit dem Schlüssel der Empfängerkomponente und sendet die Daten dann zu der Empfängerkomponente (30),
- die Empfängerkomponente empfängt die Daten (31) unverschlüsselt.

2. Verfahren nach Anspruch 1, **dadurch gekennzeichnet, dass** es den folgenden Schritt beinhaltet: wenn die kryptographische Ressource eine Ver- oder Entschlüsselungsanforderung in Verbindung mit einem kryptographischen Schlüssel erkennt, der nicht zu der anfordernden Komponente der kryptografischen Operation gehört, dann sperrt sie die Übertragung und sendet eine Sicherheitswarnung zu dem kryptographischen Mittel.

3. Verfahren nach Anspruch 1, **dadurch gekennzeichnet, dass** es wenigstens die folgenden Schritte beinhaltet: wenn eine Hardware- oder Softwarekomponente eine zweite oder eine dritte Stufe erhält, ohne die erste bzw. die zweite Stufe bearbeitet zu haben, dann sperrt sie die Übertragung und sendet eine Sicherheitswarnung zu dem kryptographischen Mittel.

4. Verfahren nach Anspruch 1, **dadurch gekennzeichnet, dass** es wenigstens die folgenden Schritte beinhaltet: die kryptografische Ressource verteilt einen Initialisierungsvektor zu den Ursprungs- und Zielkomponenten vor jeder Übertragung von unverschlüsselten Daten.

FIG.1

FIG.2

FIG.3

FIG.4

FIG.5

COMPOSANT
SOURCE

18 — RESSOURCE
CRYPTOGRAPHIQUE

17 — COMPOSANT
DESTINATAIRE

16

**PASSE N°1**

20 — DONNEES EN CLAIR

21

CHIFFREMENT AVEC LA
CLEF DU COMPOSANT SOURCE

22

DONNEES CHIFFREES PAR LA
CLEF DU COMPOSANT SOURCE

**PASSE N°2**

23 — DONNEES CHIFFREES PAR LA
CLEF DU COMPOSANT SOURCE

24

CHIFFREMENT AVEC LA
CLEF DU COMPOSANT DESTINATAIRE

25

DONNEES CHIFFREES PAR LA
CLEF DU COMPOSANT SOURCE ET
PAR LA CLEF DU
COMPOSANT DESTINATAIRE

**PASSE N°3**

DONNEES CHIFFREES PAR LA
CLEF DU COMPOSANT SOURCE ET
PAR LA CLEF DU
COMPOSANT DESTINATAIRE

26

27

DECHIFFREMENT AVEC LA
CLEF DU COMPOSANT SOURCE

28

DONNEES CHIFFREES
PAR LA CLEF DU
COMPOSANT DESTINATAIRE

**PASSE N°4**

29 — DONNEES CHIFFREES
PAR LA CLEF DU
COMPOSANT DESTINATAIRE

30

DECHIFFREMENT AVEC LA
CLEF DU COMPOSANT DESTINATAIRE

31

DONNEES EN CLAIR

## FIG.6

**EP 2 025 090 B1**

## RÉFÉRENCES CITÉES DANS LA DESCRIPTION

**Documents brevets cités dans la description**

- US 5164986 A